# EUROPÄISCHE PATENTSCHRIFT

(11) **EP 1 897 724 B1**
(45) Veröffentlichungstag und Bekanntmachung des Hinweises auf die Patenterteilung: **10.10.2012**
(21) Anmeldenummer: 07015442.2
(22) Anmeldetag: 07.08.2007
(51) Int. Cl.: B60J 7/14, B60J 7/00, B60J 7/12

(54) **Verdeck für ein Cabriolet**
Top for a convertible
Capote pour un cabriolet

(30) Priorität: 08.09.2006 DE 102006042264
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE); Liebhardt, Randolf, 71120 Grafenau (DE)

(56) Entgegenhaltungen:
- WO-A1-2005/105497
- DE-A1- 10 102 643
- DE-A1- 19 962 995
- DE-B3- 10 251 961

## Beschreibung

Bei der Erfindung wird ausgegangen von einem Verdeck für ein Cabriolet, gemäß Oberbegriff des Patentanspruchs 1. Ein solches Verdeck ist aus der DE 102 51 961 B3 bekannt.

Aus der DE 199 62 995 A1 ist ein gattungsbildendes Verdeck für ein Cabriolet bekannt. Es umfasst ein Verdeckgestell, das ein mit einem Verdecklager des Cabriolets verbindbares Hauptgestänge sowie jeweils einen seitlichen Dachrahmen aufweist. Zumindest ein Dachrahmenabschnitt jedes Dachrahmens ist zweiteilig ausgeführt und weist ein inneres Gestellteil und einen seitlich außen an dem inneren Gestellteil beweglich angelenkten Profilabschnitt auf. Der bewegliche Profilabschnitt ist über eine etwa in Fahrzeughochrichtung verlaufende Schwenkachse an dem inneren Gestellteil angebunden. Über eine Lenkerstange ist der Profilabschnitt mit dem Hauptgestänge verbunden, so dass bei einer Ablagebewegung des Verdecks der Profilabschnitt um seine Schwenkachse nach außen geschwenkt werden kann.

Ferner ist der DE 102 51 961 B3 ein Verdeck zu entnehmen, bei welchem ein zweiteiliger Dachrahmenabschnitt mit einem inneren Gestellteil und einem daran angelenkten Profilabschnitt ausgeführt ist. Der bewegliche Profilabschnitt wird hier über eine in sich gedrehte Führungsbahn nach innen, also in Richtung zur Fahrzeugmitte geschwenkt.

Aus der WO 2005/105497 A1 ist ein Verdeck bekannt, bei dem ein seitlicher Dachrahmenabschnitt um eine Drehachse gelagert ist, so dass bei einer Ablagebewegung des Verdecks dieser Dachrahmenabschnitt nach innen, also in Richtung Fahrzeugmitte um die Drehachse geschwenkt werden kann.

Aufgabe der Erfindung ist es, ein Verdeck der eingangsgenannten Art anzugeben, bei dem die Packhöhe des abgelegten Verdecks optimiert ist.

Gelöst wird diese Aufgabe mit einem Verdeck, welches die in Anspruch 1 genannten Merkmale aufweist. Vorteilhafte Weiterbildungen sind Gegenstand der Unteransprüche.

Die mit der Erfindung hauptsächlich erzielten Vorteile sind neben einer verringerten Packhöhe des abgelegten Verdecks darin zu sehen, dass über die zumindest zwei Lenker aufweisende Lenkeranordnung der äußere Profilabschnitt gegenüber dem inneren Gestellteil eine nach außen gerichtete Ausstellbewegung, insbesondere Schubbewegung, ausführt, um eine Kollision des Profilabschnitts mit einer Innenverkleidung des Cabriolets bei der Ablagebewegung zu verhindern. Insbesondere lässt sich auch die Packhöhe bei abgelegtem Verdeck dadurch reduzieren, dass mehrere Dachrahmenabschnitte nicht übereinander zu liegen kommen. Je nach Ausführung der Lenkeranordnung kann auf einfache Art und Weise eine Anpassung der Ausstellbewegung des Profilabschnitts an unterschiedliche Verdecke bzw. Aufbauten von Cabriolets angepasst werden. Der Profilabschnitt ist zumindest zweiteilig ausgeführt und weist einen inneren Dichtungsträger und einen äußeren Dichtungsstrang auf. An dem Dichtungsträger kann die Lenkeranordnung ohne weiteres angebunden werden, ohne dabei die Funktion des Dichtungsstranges zu beeinflussen, der in Schließstellung des Verdecks mit der bzw. den Seitenscheiben des Cabriolets zusammenwirkt. Der innere Dichtungsträger ist so ausgeführt, dass bei an dem inneren Gestellteil angelegten Profilabschnitt die Lenkeranordnung Platz sparend zwischen Dichtungsträger und Dichtungsstrang aufgenommen werden kann.

Bevorzugt wird nach Anspruch 2 als Lenkeranordnung ein Vielgelenk, insbesondere Viergelenk, vorgesehen. Die Weite der Ausstellbewegung des Profilabschnitts lässt sich mit einem Vielgelenk ohne weiteres maximieren, so dass der Profilabschnitt bzgl. des inneren Gestellteils sehr weit wegbewegt werden kann. Als Alternative zu dem Viergelenk wäre bspw. ein Scherengelenk möglich.

In den Ansprüchen 3 bis 5 sind verschiede Orientierungen der Ausstellbewegung, insbesondere Schubbewegung, angegeben, wobei jede Ausstellbewegung für sich alleine oder in beliebiger Kombination mit einer der anderen Ausstellbewegungen ausführbar ist. Besonders bevorzugt wird die Erfindung bei einem Verdeck eingesetzt, welches als Hauptgestänge ein Hauptviergelenk umfasst, wobei das innere Gestellteil des Dachrahmenabschnitts Bestandteil dieses Hauptviergelenks ist.

Entsprechend Anspruch 8 wird die Erfindung besonders bevorzugt bei einem Verdeck verwendet, bei dem ein vorderes Dachteil mit einem vorderen Dachrahmenabschnitt ausgestattet ist, wobei das vordere Dachteil über eine Verbindungslenkeranordnung mit dem Hauptgestänge, insbesondere mit dem Hauptviergelenk, verbunden ist. An den vorderen Dachrahmenabschnitt schließt sich der erfindungsgemäße zweiteilige Dachrahmenabschnitt mit dem äußeren Profilabschnitt dahinter an, der über die Lenkeranordnung an dem inneren Gestellteil angelenkt ist.

Die Erfindung wird nachfolgend anhand von Ausführungsbeispielen mit Bezug auf die Zeichnung näher erläutert. Es zeigen:
- Fig. 1: schematisch ein teilgeöffnetes Verdeck für eine Cabriolet und
- Fig. 2: in Detailansicht das Verdeck mit einem zweiteiligen Dachrahmenabschnitt und einer Lenkeranordnung.

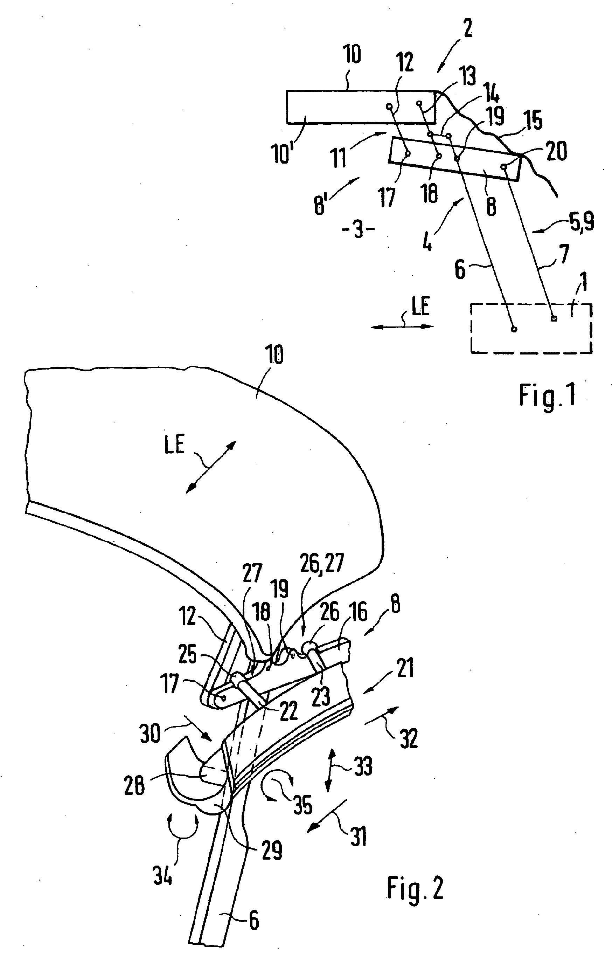

In Fig. 1 ist von einem hier nicht näher dargestellten Cabriolet lediglich ein Verdecklager 1 dargestellt, an dem ein Verdeck 2 beweglich derart angeordnet ist, dass es aus einer nicht gezeigten Schließstellung, in der es einen Fahrgastraum 3 überspannt, in eine heckseitige, ebenfalls nicht gezeigte Ablagestellung bewegt werden kann. Das Verdeck 2 besitzt ein Verdeckgestell 4 mit mehreren Gestellteilen, von denen ein Hauptgestänge 5 mit dem Verdecklager 1 verbunden ist. Das Hauptgestänge 5 weist zumindest zwei Lenker, hier einen so genannten Dachlenker 6 und einen Hauptlenker 7 auf, die zusammen mit einem seitlichen Dachrahmenabschnitt 8 eines seitlichen Dachrahmens 8' ein Hauptviergelenk 9 bilden. An den Dachrahmenabschnitt 8 schließt sich ein vorderes Dachteil 10 mit einem vorderen Dachrahmenabschnitt 10' des Verdecks 2 an, welches über eine Verbindungslenkeranordnung 11 mit dem dahinter liegenden Dachrahmenabschnitt 8 verbunden ist. Die Verbindungslenkeranordnung 11 bildet vorzugsweise ein zweites Viergelenk des Verdeckgestells 4 und umfasst daher einen vorderen und hinteren Steuerlenker 12 und 13, die jeweils schwenkbeweglich mit dem vorderen Dachteil 10 und dem Dachrahmenabschnitt 8 verbunden sind. In die Kinematik des Verdeckgestells 4 eingekoppelt ist das vordere Dachteil 10 über einen Koppellenker 14, der das Hauptgestänge 5 und die Verbindungslenkeranordnung 11 miteinander koppelt. Außerdem weist das Verdeck 2 noch einen in an sich bekannter Weise von dem Verdeckgestell 4 getragenen Verdeckbezug 15 auf.

In Fig. 1 ist das Verdeck 2 in einer Teilöffnungsposition dargestellt, die zwischen der vollständigen Schließposition und der Ablageposition in einem hier nicht dargestellten Verdeckkasten liegt, wodurch die Gestellteile des Verdeckgestells 4 aus ihrer teilweisen Überdeckungslage heraus bewegt und somit deutlich zu sehen sind. Das vordere Dachteil 10 bildet den vorderen Dachrahmenabschnitt 10', an den sich - in Schließstellung des Verdecks - der Dachrahmenabschnitt 8 anschließt, an welchen sich - nach einem nicht gezeigten Ausführungsbeispiel - ein weiterer bzw. dritter Dachrahmenabschnitt anschließen kann, der von zumindest einem der Lenker 6 und/oder 7 gebildet wird.

Anhand von Fig. 2 wird nachfolgend der Dachrahmenabschnitt 8 näher erläutert, wobei in Fig. 2 dieselben Teile wie in Fig. 1 mit denselben Bezugszeichen versehen sind. Der Dachrahmenabschnitt 8 ist zweiteilig ausgeführt und weist ein inneres, dem Verdeckgestell 4 zugeordnetes Gestellteil 16 auf, welches die diesem Dachrahmen 8 zugeordneten Schwenklager 17 bis 20 des Verdeckgestells 4 trägt, wobei in Fig. 2 das hintere Schwenklager 20 für den Hauptlenker 7 nicht zu sehen ist. Das innere Gestellteil 16 ist somit Bestandteil des Hauptgestänges 5 sowie der Verbindungslenkeranordnung 11 für das vordere Dachteil 10. Das zweite Teil des Dachrahmenabschnitts 8 wird gebildet von einem Profilabschnitt 21, der über eine zumindest zwei Lenker 22 und 23 umfassende Lenkeranordnung 24 mit dem inneren Gestellteil 16 beweglich verbunden ist. In Längserstreckungsrichtung LE des Verdecks 2 sind die beiden Lenker 22 und 23 hintereinander an dem inneren Gestellteil 16 schwenkbeweglich mit ihren ersten Enden 25 bzw. 26 angebunden. Die hier nicht dargestellten anderen Enden der Lenker 22 und 23 sind ebenfalls schwenkbeweglich an dem Profilabschnitt 21 gehalten. Außerdem liegen die beiden Lenker 22 und 23 etwa auf gleichem Niveau, d.h. in einer etwa horizontalen Ebene, wenn das Verdeck 2 in der erwähnten Schließstellung vorliegt. Im gezeigten Ausführungsbeispiel bilden die beiden Lenker 22 und 23 mithin ein etwa horizontal liegendes Vielgelenk, insbesondere Viergelenk 27, dem das innere Gestellteil 16 sowie der Profilabschnitt 21 zugeordnet sind. Der Profilabschnitt 21 lässt sich dadurch zumindest seitlich nach außen in er Schubbewegung als Ausstellbewegung verlagern, worauf weiter unten näher eingegangen wird.

Der Profilabschnitt 21 ist in bevorzugter Ausführungsform zweiteilig realisiert und umfasst einen Dichtungsträger 28 an dem ein äußerer Dichtungsstrang 29 angeordnet ist. Der Dichtungsstrang 29 ist vorzugsweise im Querschnitt als offenes Dichtprofil realisiert, das sich in Richtung des inneren Gestellteils 16 öffnet, wodurch in einer hier nicht gezeigten eingefahrenen Schließposition des Profilabschnitts 21 die Lenkeranordnung 24 zwischen dem Dichtungsstrang 29 und dem Dichtungsträger 28 Platz sparend aufgenommen werden kann. In der eben erwähnten Schließstellung des Profilabschnitts 21, die im Übrigen der Schließstellung des Verdecks zugeordnet ist, liegt der Profilabschnitt 21 nahe an dem inneren Gestellteil 16 bzw. liegt daran an. Somit wird aus Fig. 2 deutlich, dass Schubbewegung (30) des Profilabschnitts 21 relativ zum inneren Gestellteil 6 nach seitlich außen verläuft, wenn das Verdeck 2 sich in der Ablagebewegung bis in den vorstehend erwähnten heckseitigen Ablagekasten befindet.

Zusätzlich zu der durch die Pfeilrichtung 30 angegebenen Ausstellbewegung kann durch variable Ausgestaltung der Lenkeranordnung 24, insbesondere als Viergelenk 27, zusätzlich eine seitlich nach vorn (Pfeil 31) und/oder nach hinten (Pfeil 32) orientierte Verschiebebewegung stattfinden, die etwa in der Längserstreckungsrichtung LE verläuft. Außerdem ist es möglich, durch die Ausgestaltung der Lenkeranordnung 24 den Profilabschnitt 21 bei der Ablagebewegung des Verdecks 2 nach unten und/oder nach oben (Doppelpfeil 33) zu bewegen. Ferner kann die Lenkeranordnung 24 so ausgestaltet sein, dass der Profilabschnitt 21 bei der Ablagebewegung des Verdecks 2 zumindest eine Rotationsbewegung (Doppelpfeil 34 bzw. 35) ausführt, wobei hier die Rotationsachse in der Längserstreckungsrichtung LE oder in einem rechten Winkel dazu verläuft. Für die Ausführung einer Rotation bei der Ausstellbewegung (Pfeil 30) des Profilabschnitts 21 kann vorgesehen sein, dass die Enden 25 und 26 der Lenker 22 und 23 über so genannte Kugelköpfe an dem inneren Gestellteil angelenkt sind. Zusätzlich oder alternativ könnten an den hier nicht zu sehenden anderen Enden der Lenker 22 und 23 Kugelköpfe zur Verbindung mit dem Dichtungsträger 28 vorgesehen sein.

Für die Steuerung der Ausstellbewegung (Pfeilrichtungen 30 bis 35) kann ein hier nicht gezeigtes Federelement zwischen Profilabschnitt 21 und innerem Gestellteil 16 angeordnet sein, das bei der Ablagebewegung des Verdecks den Profilabschnitt 21 aus seiner benachbart zum inneren Gestellteil 16 liegenden Einfahrstellung in die gewünschte Ausfahrstellung drängt. Für die Bewegungssteuerung des Profilabschnitts 21 umgekehrt dazu kann ein hier nicht gezeigtes flexibles Zugelement, insbesondere ein Bowdenzug, vorgesehen sein, der mit dem Profilabschnitt 21 und - zur Steuerung der Bewegung - an die Verbindungslenkeranordnung 11 oder an das Hauptgestänge 5 verbunden ist. Als Alternative wäre es denkbar, einen Steuerlenker zwischen dem vorderen Dachteil 10 bzw. der Verbindungslenkeranordnung 11 und dem Profilabschnitt 21 vorzusehen. Dieser nicht gezeigte Steuerlenker würde somit den Profilabschnitt 21 zwangsgesteuert in den Bewegungsablauf der Verdeckbewegung einkoppeln und somit dem Profilabschnitt 21 die Ausstellbewegung (Pfeile 30 bis 35) zwangsweise aufprägen.

## Patentansprüche

1. Verdeck (2) für ein Cabriolet, mit einem Verdeckgestell (4), das ein mit einem Verdecklager (1) des Cabriolets verbindbares Hauptgestänge (5) sowie jeweils einen seitlichen Dachrahmen (8') aufweist, der zumindest abschnittweise als ein zweiteiliger Dachrahmenabschnitt (8) mit einem inneren Gestellteil (16) und mit einem seitlich außen an dem inneren Gestellteil (16) beweglich angelenkten Profilabschnitt (21) ausgeführt ist, wobei der äußere Profilabschnitt (21) über eine zumindest zwei Lenker (22, 23) aufweisende Lenkeranordnung (24) an dem inneren Gestellteil (16) angelenkt ist und der Profilabschnitt (21) zumindest zweiteilig mit einem Dichtungsträger (28) und einem Dichtungsstrang (29) ausgeführt ist, **dadurch gekennzeichnet, dass** die Lenkeranordnung (24) zwischen dem Dichtungsträger (28) und dem Gestellteil (16) angeordnet ist und dass die Lenkeranordnung (24) so ausgebildet ist, dass der Profilabschnitt (21) bei einer Ablagebewegung des Verdecks (2) zumindest nach seitlich außen (Pfeilrichtung 30) verschoben wird.

2. Verdeck nach Anspruch 1, **dadurch gekennzeichnet, dass** die Lenkeranordnung (24) mit dem inneren Gestellteil (16) und dem Profilabschnitt (21) ein Vielgelenk, insbesondere Viergelenk (27), bildet.

3. Verdeck nach einem der vorhergehenden Ansprüche, **dadurch gekennzeichnet, dass** die Lenkeranordnung (24) so ausgebildet ist, dass der Profilabschnitt (21) bei einer Ablagebewegung des Verdecks (2) zusätzlich zumindest nach vorn bzw. hinten (Pfeilrichtung 31, 32) verschoben wird.

4. Verdeck nach einem der vorhergehenden Ansprüche, **dadurch gekennzeichnet, dass** die Lenkeranordnung (24) so ausgebildet ist, dass der Profilabschnitt (21) bei einer Ablagebewegung des Verdecks (2) zusätzlich zumindest nach unten bzw. oben (Doppelpfeil 33) verschoben wird.

5. Verdeck nach einem der vorhergehenden Ansprüche, **dadurch gekennzeichnet, dass** die Lenkeranordnung (24) so ausgebildet ist, dass der Profilabschnitt (21) bei einer Ablagebewegung des Verdecks (2) zusätzlich zumindest eine Rotationsbewegung (Doppelpfeil 34, 35) ausführt.

6. Verdeck nach einem der vorhergehenden Ansprüche, **dadurch gekennzeichnet, dass** die Lenker (22,23) der Lenkeranordnung (24) - in Schließstellung des Verdecks gesehen - etwa ein horizontales liegendes Viergelenk (27) bilden.

7. Verdeck nach einem der vorhergehenden Ansprüche, **dadurch gekennzeichnet, dass** es weiterhin umfasst ein Hauptviergelenk (9) als Hauptgestänge (5), wobei das innere Gestellteil (16) Bestandteil dieses Hauptviergelenks (9) ist.

8. Verdeck nach einem der vorhergehenden Ansprüche, **dadurch gekennzeichnet, dass** es weiterhin umfasst ein vorderes Dachteil (10) mit einem vorderen Dachrahmenabschnitt (10'), das über eine Verbindungslenkeranordnung (11) mit dem Hauptgestänge (5) verbunden ist, wobei der zweiteilige Dachrahmenabschnitt (8) sich hinten an den vorderen Dachrahmenabschnitt (10') anschließt.

## Claims

1. Top (2) for a convertible, with a top framework (4) which has a main linkage (5), which is connectable to a top bearing (1) of the convertible, and in each case a lateral roof frame (8') which is at least partially designed as a two-part roof frame section (8) with an inner framework part (16) and with a profile section (21) coupled moveably laterally on the outside of the inner framework part (16), wherein the outer profile section (21) is coupled to the inner framework part (16) via a link arrangement (24) having at least two links (22, 23), and the profile section (21) is designed at least in two parts with a sealing support (28) and a sealing strand (29), **characterized in that** the link arrangement (24) is arranged between the sealing support (28) and the framework part (16), and **in that** the link arrangement (24) is designed in such a manner that, during a putting-away movement of the top (2), the profile section (21) is displaced at least laterally outwards (arrow direction 30).

2. Top according to Claim 1, **characterized in that** the link arrangement (24) together with the inner framework part (16) and the profile section (21) forms a multi-bar linkage, in particular four-bar linkage (27).

3. Top according to either of the preceding claims, **characterized in that** the link arrangement (24) is designed in such a manner that, during a putting-away movement of the top (2), the profile section (21) is additionally displaced at least forwards or rearwards (arrow directions 31, 32).

4. Top according to one of the preceding claims, **characterized in that** the link arrangement (24) is designed in such a manner that, during a putting-away movement of the top (2), the profile section (21) is additionally displaced at least downwards or upwards (double arrow 33).

5. Top according to one of the preceding claims, **characterized in that** the link arrangement (24) is designed in such a manner that, during a putting-away movement of the top (2), the profile section (21) additionally executes at least one rotational movement (double arrow 34, 35).

6. Top according to one of the preceding claims, **characterized in that** the links (22, 23) of the link arrangement (24) - as seen in the closed position of the top - approximately form a horizontal, lying four-bar linkage (27).

7. Top according to one of the preceding claims, **characterized in that** said top furthermore comprises a main four-bar linkage (9) as the main linkage (5), wherein the inner framework part (16) is part of said main four-bar linkage (9).

8. Top according to one of the preceding claims, **characterized in that** said top furthermore comprises a front roof part (10) with a front roof frame section (10') which is connected to the main linkage (5) via a connecting link arrangement (11), wherein the two-part roof frame section (8) adjoins the front roof frame section (10') at the rear.

## Revendications

1. Capote (2) pour un cabriolet, avec un châssis de capote (4), qui présente une tringlerie principale (5) pouvant être reliée à un appui de capote (1) du cabriolet ainsi que respectivement un cadre de toit latéral (8'), qui est réalisé au moins localement sous la forme d'une partie de cadre de toit en deux pièces (8) avec une partie de châssis intérieure (16) et avec une partie de profilé (21) articulée de façon mobile latéralement à l'extérieur à la partie de châssis intérieure (16), dans laquelle la partie de profilé extérieure (21) est articulée à la partie de châssis intérieure (16) par un agencement de bielles (24) présentant au moins deux bielles (22, 23) et la partie de profilé (21) est réalisée en au moins deux pièces avec un support de joint d'étanchéité (28) et un cordon d'étanchéité (29), **caractérisée en ce que** l'agencement de bielles (24) est disposé entre le support de joint d'étanchéité (28) et la partie de châssis (16), et **en ce que** l'agencement de bielles (24) est conçu de telle manière que la partie de profilé (21) soit déplacée au moins latéralement vers l'extérieur (direction de la flèche 30) lors d'un mouvement d'abaissement de la capote (2).

2. Capote selon la revendication 1, **caractérisée en ce que** l'agencement de bielles (24) forme, avec la partie de châssis intérieure (16) et la partie de profilé (21), une articulation multiple, en particulier un quadrilatère articulé (27).

3. Capote selon l'une quelconque des revendications précédentes, **caractérisée en ce que** l'agencement de bielles (24) est conçu de telle manière que la partie de profilé (21) soit déplacée en plus au moins vers l'avant ou vers l'arrière (direction de la flèche 31, 32) lors d'un mouvement d'abaissement de la capote (2).

4. Capote selon l'une quelconque des revendications précédentes, **caractérisée en ce que** l'agencement de bielles (24) est conçu de telle manière que la partie de profilé (21) soit déplacée en plus au moins vers le bas ou vers le haut (double flèche 33) lors d'un mouvement d'abaissement de la capote (2).

5. Capote selon l'une quelconque des revendications précédentes, **caractérisée en ce que** l'agencement de bielles (24) est conçu de telle manière que la partie de profilé (21) décrive en plus au moins un mouvement de rotation (double flèche 34, 35) lors d'un mouvement d'abaissement de la capote (2).

6. Capote selon l'une quelconque des revendications précédentes, **caractérisée en ce que** les bielles (22, 23) de l'agencement de bielles (24) - vues dans la position de fermeture de la capote - forment sensiblement un quadrilatère articulé (27) disposé horizontalement.

7. Capote selon l'une quelconque des revendications précédentes, **caractérisée en ce qu'**elle comprend en outre un quadrilatère articulé principal (9) formant la tringlerie principale (5), dans laquelle la partie de châssis intérieure (16) fait partie de ce quadrilatère articulé principal (9).

8. Capote selon l'une quelconque des revendications précédentes, **caractérisée en ce qu'**elle comprend en outre une partie de toit avant (10) avec une partie de cadre de toit avant (10'), qui est reliée à la tringlerie principale (5) par un agencement de bielles de liaison (11), dans laquelle la partie de cadre de toit en deux pièces (8) se raccorde à l'arrière à la partie de cadre de toit avant (10').
